# FASCICULE DE BREVET EUROPEEN

(11) **EP 3 386 428 B1**
(45) Date de publication et mention de la délivrance du brevet: **29.01.2020**
(21) Numéro de dépôt: 16798237.0
(22) Date de dépôt: 17.10.2016
(51) Int. Cl.: A61C 13/00, B29C 45/00

(54) **DISQUE USINABLE PAR CFAO POUR LA FABRICATION D'INLAYS AVEC FIBRES**
CAD/CAM-ZERSPANBARE SCHEIBE FÜR DIE HERSTELLUNG VON FASERNINLAYKERNEN
CAD/CAM-MACHINABLE DISC FOR THE MANUFACTURE OF FIBER INLAY-CORES

(30) Priorité: 10.12.2015 FR 1562143
(43) Date de publication de la demande: 17.10.2018
(73) Titulaire: Société de Recherches Techniques Dentaires - RTD, 38120 Saint Egreve (FR)
(72) Inventeur: REYNAUD, Pierre-Luc, 38410 Vaulnaveys le Haut (FR); CHU, Manh-Quynh, 38120 Fontanil Cornillon (FR); GONZALEZ, Mélissa, 38400 Saint Martin d'Heres (FR); RAJON, Cyril, 38950 Quaix en Chartreuse (FR)
(74) Mandataire: Cabinet Laurent & Charras
(86) Numéro de dépôt international: PCT/FR2016/052677
(87) Numéro de publication internationale: WO 2017/098096

(56) Documents cités:
- EP-A1- 0 432 001
- WO-A1-2009/144901
- WO-A1-2009/154301
- US-A1- 2003 176 126
- US-A1- 2009 130 634

## Description

L'invention a pour objet une préforme ou support, avantageusement un disque standardisé pour les machines d'usinage CFAO ou plus généralement un support usinable par CFAO pour la fabrication d'inlay core fibrés (tenon + faux moignon), de tenons et de piliers d'implant (abutment) notamment. Elle concerne également un procédé de fabrication dudit support. Elle a aussi pour objet les inlay core, les tenons et les piliers d'implant obtenus par CFAO.

L'invention sera par la suite plus particulièrement décrite en relation avec les inlay core.

L'inlay core est une pièce monobloc constituée d'un tenon surmonté d'un faux moignon. Il est réalisé en métal, plus rarement en céramique. Il est formé d'une seule pièce, raison pour laquelle il est désigné « monobloc » (core). Il est donc constitué d'un même matériau. L'inlay core sert de support à une reconstitution externe de la dent, en pratique une couronne.

Les alliages métalliques utilisés pour la fabrication des inlay core, sont en général des aciers inoxydables, parfois des métaux semi-précieux. Ils ont pour principaux inconvénients d'être sujets à des phénomènes de corrosion d'origine chimique ou électrochimique. En outre, ils présentent un module d'élasticité plus élevé que celui de la dentine pouvant conduire à terme, à une désolidarisation de l'inlay-core. Enfin, ils permettent difficilement le réaccès canalaire, c'est-à-dire la possibilité de retirer l'inlaycore en cas d'infection apicale.

Sur le plan de la fabrication, les inlay core peuvent être obtenus par usinage de préformes en alliage métallique ou en céramique, par CFAO. Ils peuvent être également obtenus par procédé de coulée cire perdue au laboratoire de prothèse.

Pour pallier les inconvénients liés à la mise en œuvre de métaux, le Demandeur a développé des tenons en matériau composite fibré autour duquel le praticien vient former le faux moignon, constitué d'une résine polymérique. Il est nécessaire de coller le faux-moignon sur le tenon, ce qui créé une interface supplémentaire que le praticien doit maitriser parfaitement. Le faux moignon vient ainsi combler l'espace vide laissé par la dent pour servir de support à la couronne proprement dite. Ce type de structure a donc pour vocation de se substituer aux inlay core, la différence étant, mise à part la nature du matériau, qu'il est fabriqué en 2 pièces et non en une pièce.

Les tenons en matériau composite fibrés sont décrits notamment dans les documents FR-A-2588181 et EP-A-432 001. Ces tenons sont en pratique constitués de fibres longues unidirectionnelles, de verre ou de carbone et plus généralement de toute matière présentant des caractéristiques mécaniques élevées. Ces fibres représentent de 60 à 70% en volume du tenon. Les fibres sont noyées, par technique de pultrusion notamment, dans une matrice de résine thermodurcissable biocompatible, notamment du type époxy ou polyépoxy, polyester, vinylester, des résines acryliques ou méthacryliques.

En pratique, on forme par pultrusion des joncs de diamètre compris entre 2 et 5 mm. Une fois réticulés et refroidis, les joncs sont usinés à la forme souhaitée.

Le praticien adapte ensuite le tenon à la longueur souhaitée et vient combler le vide laissé par la dent par le biais d'une pâte composite.

Aucune solution n'a été proposée pour la fabrication d'inlay core composites fibrés monobloc, c'est-à-dire d'inlay core constitués de fibres unidirectionnelles noyées dans une matrice polymérique. L'idéal serait de pouvoir le faire par CFAO mais aucune technique n'a encore été mise au point.

L'usinage des prothèses dentaires, spécifiquement des couronnes et des bridges par CFAO (Conception Fabrication Assistée par Ordinateur) est parfaitement connu. Cette technologie, également désignée CAD/CAM a par exemple été décrite dans le document EP040165B1. La technologie a depuis évolué, tant sur le plan du matériel de CFAO, que sur le plan de la composition des préformes. Le document WO2010/109496 décrit par exemple une préforme en matériau composite constituée d'une superposition de nappes fibreuses parallèles noyées dans une matrice polymérique. Les nappes sont réparties sur toute l'épaisseur de la préforme et sont reliées chacune par des fils transversaux. La préforme sert à la réalisation de couronnes notamment. Selon une caractéristique essentielle, les nappes sont tissées selon des motifs spécifiques, avec une proportion de fils dans le sens trame différente de la proportion de fils dans le sens chaine. Cette préforme présente l'inconvénient de ne pouvoir être utilisée pour l'usinage d'inlay core car la résistance mécanique du matériau composite n'est pas suffisante.

Le document US2002/086266 A1 décrit une préforme en matériau composite destinée à être ultérieurement usinée par CFAO. Elle est utilisée pour la fabrication de couronnes, bridges, tenon, inlay etc... Ce document ne fait pas référence aux inlay core. Pour la fabrication de tenons, la préforme se présente sous la forme d'un barreau dont le diamètre est choisi pour correspondre à celui du canal radicalaire. Dans ces conditions, la préforme n'est pas adaptée aux machines CFAO actuelles qui sont dimensionnées pour recevoir des préformes sous la forme de disques de diamètre standard de 98 mm.

Le document US2003/0176126 décrit un matériau monolithe fibreux constitué de filaments extrudés. Les filaments présentent une structure noyau / enveloppe et sont obtenus par extrusion d'un mélange de poudres contenant des liants polymériques. Les filaments sont ensuite associés les uns aux autres de diverse manière pour former des faisceaux (bundle) ou encore par tissage. Le matériau composite obtenu est ensuite appliqué sur la surface de matériau pour en améliorer la dureté.

WO2009/154301 divulgue une préforme pour machine d'usinage CFAO.

Le problème que se propose de résoudre l'invention est de proposer une préforme qui puisse être usinée par CFAO pour la fabrication d'inlay core composites fibrés, de tenons, ou encore de piliers d'implant.

Une solution serait celle de fabriquer une préforme sous la forme d'une portion de jonc composite fibré, de diamètre de 98 mm. Cette solution n'est pas satisfaisante en ce qu'elle n'est économiquement pas rentable. En effet, pour réaliser les joncs contenant de 60 à 70% de fibres en volume, le nombre de bobine de fibres pour obtenir un diamètre de 98 mm serait trop élevé : de l'ordre de 10 820 mèches de fibres !

Le Demandeur a eu l'idée d'incorporer des portions de joncs de fibres unidirectionnelles noyées dans une matrice polymérique dans des alvéoles adaptées, agencées sur un support.

Plus précisément, l'invention a pour objet un support ou préforme pour machine d'usinage CFAO, présentant une face supérieure et une face inférieure et comprenant au moins une alvéole remplie d'un matériau composite destiné à être usiné par CFAO, ledit matériau comprenant des fibres longues unidirectionnelles (UD) noyées dans une matrice polymérique réticulée.

L'invention est définie dans les revendications.

En pratique, le matériau composite contient au moins 80%, de préférence au moins 90%, avantageusement 100% de fibres longues UD, c'est-à-dire de fibres parallèles entre elles.

Dans un mode de réalisation avantageux, le matériau composite contient au moins 80%, de préférence au moins 90%, avantageusement 100% de fibres longues UD positionnées verticalement dans la matrice par rapport aux faces supérieure et inférieure du support.

Dans la suite de la description et dans les revendications, on utilise indistinctement les termes « préforme » et « support » pour désigner l'objet de l'invention.

En d'autres termes, l'invention consiste à fabriquer des joncs, notamment par pultrusion, de préférence circulaires, constitués de fibres UD noyées dans une matrice polymérique. Les joncs sont ensuite découpés en plusieurs tronçons et sont positionnés dans les alvéoles circulaires d'un support. Dans la pratique, le support se présente sous la forme d'un disque dont les dimensions correspondent à celles d'un disque standard utilisé en CFAO. En pratique, il s'agit d'un disque de 98 mm de diamètre. Il est donc adapté aux machines actuelles.

Dans un mode de réalisation particulier, la préforme ne contient qu'une seule alvéole. Dans ces conditions, la préforme se présente par exemple sous la forme d'un parallélépipède de 14 x 14 mm de côté et de longueur égale à 18 mm.

Il devient ainsi possible de fabriquer des inlay core composites fibrés par CFAO à partir d'une préforme adaptée.

Dans la suite de la description, on désigne le matériau composite fibré remplissant les alvéoles par l'expression « portion ou tronçon de jonc ». C'est dans ce matériau que seront usinés les inlay core, tenons ou encore piliers d'implant.

L'invention concerne également des inlay core composites fibrés constitués de fibres longues unidirectionnelles (UD) longitudinales noyées dans une matrice polymérique réticulée. Ces inlay core sont susceptibles d'être obtenus par usinage d'une préforme par CFAO. A la connaissance du Demandeur, des inlays core obtenus par CFAO d'une préforme faite du matériau composite tel que décrit précédemment n'a jamais été proposée. Il en est de même concernant les tenons et les piliers d'implants.

Bien entendu, le support peut se présenter sous une autre forme qu'une forme cylindrique en fonction de la machine à CFAO utilisée et de leur évolution. De même, les joncs peuvent être carrés, rectangulaires et de manière générale, de n'importe quelle forme géométrique en fonction de la filière utilisée. Bien entendu, les dimensions des alvéoles seront elles aussi fonction de la dimension des joncs et du produit destiné à être usiné : inlay core, tenon ou pilier. En pratique, les alvéoles ont un diamètre de 3 à 18, de préférence à 20 mm et une profondeur avantageusement comprise entre 10 et 24 mm, de préférence de l'ordre de 16 mm.

De manière générale, les joncs remplissent 100% du volume de chaque alvéole.

Avantageusement, les alvéoles débouchent sur chaque face du support de sorte que le matériau composite affleure chacune des faces. Cette caractéristique, en combinaison avec le fait que la totalité du volume des alvéoles est remplie du matériau composite, permet ainsi de disposer d'un support symétrique qui peut être utilisé dans n'importe quel sens, ce qui facilite la tâche du praticien.

Bien entendu, les alvéoles peuvent également être non débouchantes et munies d'un fond. Dans ces conditions, le support ne peut être utilisé que dans le sens permettant l'accès à l'outil d'usinage. Ce dernier accèdera ou non au matériau composite en fonction de l'épaisseur du support recouvrant les alvéoles.

Le support en tant que tel peut être creux. Les alvéoles sont dans ce cas définies par une paroi latérale reliant les faces supérieure et inférieure du support. Il est fabriqué de préférence en matière plastique.

Avantageusement, le support est plein, c'est-à-dire qu'il est fait de résine thermoplastique ou thermodurcissable sur toute son épaisseur et entre chaque alvéole.

Selon une caractéristique essentielle, les joncs doivent être maintenus en position fixe dans les alvéoles. En effet, au moment de l'usinage, ils ne doivent pas bouger de manière à ne pas modifier la forme de l'inlay-core, tenon ou pilier programmée par le logiciel.

Les portions ou tronçons de joncs peuvent être rendues solidaires du support par tout moyen.

Dans un premier mode de réalisation, elles peuvent être insérées en force dans les alvéoles qui sont dans ce cas, de diamètre légèrement inférieur.

Dans un autre mode de réalisation, les portions de joncs sont collées par le biais d'une couche adhésive à toute ou partie de la paroi de l'alvéole. C'est notamment le cas lorsque la résine constitutive de la matrice et celle constitutive du support ne sont pas identiques ou pas compatibles.

Dans un mode de réalisation avantageux, au moment de la fabrication, le matériau plastique constitutif du support est avantageusement coulé autour des portions de joncs au sein d'un moule adapté. Pour fixer les joncs dans les alvéoles, les matériaux constitutifs de la matrice dans laquelle sont noyées les fibres et du support sont identiques ou compatibles. Ils seront choisis par l'homme du métier en fonction des propriétés recherchées.

Dans tous les cas, il s'agit d'une résine choisie dans le groupe des résines thermodurcissables comprenant PMMA, TEGDMA, BISGMA, BDMA, HDDMA, UDMA, époxy et vinylester, ou dans le groupe des résines thermoplastiques notamment PC, POM, PU.

S'agissant des fibres, celles-ci sont choisies notamment dans le groupe comprenant les fibres de verre telles que par exemples les fibres E, R, S, AR et XRO notamment, silice (quartz).

Avantageusement, la proportion de fibres longues représente de 40 à 80%, avantageusement 60 à 70% en volume de la matrice polymérique, le complément à 100 % étant occupé par la matrice.

Comme déjà dit, le support peut être utilisé pour la fabrication d'inlay core avant tout. Elle peut néanmoins être mise en œuvre également pour la fabrication de tenons ou de piliers d'implant. L'ensemble de ces structures présenteront toutes les caractéristiques précédemment décrites concernant la nature des fibres, de la matrice, volume des fibres notamment.

L'invention a également pour objet un procédé de fabrication du support tel que précédemment décrit.

Ce procédé comprend les étapes suivantes réalisées dans un moule :
∘ on positionne des cylindres ou portions de joncs constitués de fibres longues unidirectionnelles longitudinales noyées dans une matrice polymérique réticulée,
∘ on coule une résine entre chaque cylindre,
∘ on réticule ladite résine,
∘ on démoule le support formé de la résine réticulée incluant les portions de joncs.

Comme déjà dit, on choisit avantageusement la résine du support pour qu'elle permette de fixer les joncs sans ajout d'adhésif.

De préférence, le moule est circulaire, de diamètre de l'ordre de 98 mm et d'épaisseur comprise entre 10 et 24 mm, de préférence de l'ordre de 16 mm.

L'invention concerne également l'utilisation du support précédemment décrit pour la réalisation d'inlay core, de tenons ou de piliers d'implant par usinage par CFAO du matériau composite remplissant les alvéoles.

L'invention et les avantages qui en découlent ressortiront bien des exemples de réalisation ci-après à l'appui des figures annexées.

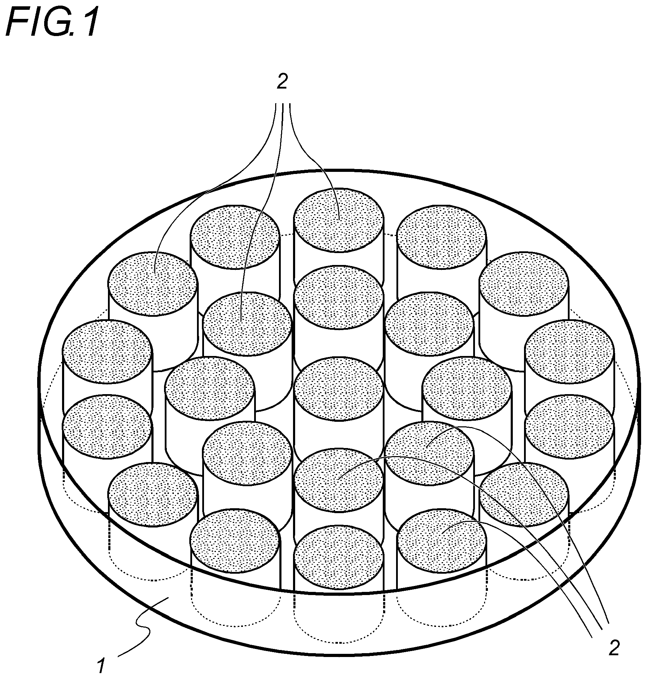

La figure 1 est une représentation du support de l'invention selon une vue en perspective.

On fabrique par pultrusion un jonc composé de 81% en poids (64% volume) de fibres unidirectionnelles de verre AR et 19% de matrice de résine époxy. Le jonc a un diamètre de 12 mm. On découpe ensuite les joncs en tronçons de 16 mm.

Dans un moule de diamètre 98 mm et d'épaisseur 16 mm ; on positionne 30 portions de joncs diamètre 12 mm ou 19 portions de diamètre 14 mm de manière repérée.

On coule ensuite dans le moule, entre chaque cylindre, une résine acrylique que l'on polymérise à froid avec un catalyseur à base de peroxyde.

Enfin, on démoule le support. Celui-ci comprend des alvéoles qui sont remplies par les portions de jonc. Le disque est ensuite introduit dans une machine d'usinage par CFAO. Chaque portion de joncs est repérée afin de faciliter son indexation dans la machine CFAO. Chaque portion est ensuite usinée par CFAO pour obtenir des inlay core, des tenons en ou encore des pilier d'implants. Dans tous les cas, ces structures sont des composites fibrées dans lesquelles les fibres sont longitudinales et unidirectionnelles.

Sur la figure 1, on a représenté le support ainsi obtenu. Il est constitué du support proprement dit (1) qui se présente sous la forme d'un disque et dont les 23 alvéoles sont remplies chacune d'une portion de jonc (2). Chaque portion de jonc est destinée à être usinée par CFAO. Bien entendu, le disque peut contenir plus d'alvéoles en fonction du diamètre des joncs.

L'invention et les avantages qui en découlent ressortent bien de la description qui précède. Elle est donnée à titre d'exemple non limitatif pour un homme de l'art. On note ainsi la possibilité de fabriquer des inlay core notamment par CFAO, en matériau composites fibrés.

## Revendications

1. Préforme pour machine d'usinage CFAO présentant une face supérieure et une face inférieure et comprenant au moins une alvéole remplies d'un matériau composite destiné à être usiné par CFAO, ledit matériau comprenant au moins 80%, de préférence au moins 90%, avantageusement 100% de fibres longues unidirectionnelles noyées dans une matrice polymérique réticulée (2) les fibres étant positionnées verticalement dans la matrice par rapport aux faces supérieure et inférieure du support.

2. Préforme selon la revendication 1, **caractérisée en ce que** les alvéoles débouchent sur chaque face du support et **en ce que** la totalité du volume des alvéoles est remplie du matériau composite.

3. Préforme selon l'une des revendications précédentes **caractérisée en ce que** les alvéoles sont cylindriques.

4. Préforme selon la revendication 3, **caractérisée en ce qu'**elles ont un diamètre de 3 à 20 mm et une profondeur avantageusement comprise entre 10 et 24 mm.

5. Préforme selon l'une des revendications précédentes, **caractérisée en ce que** le support se présente sous la forme d'un disque, avantageusement de diamètre égal à 98 mm.

6. Préforme selon l'une des revendications précédentes, **caractérisée en ce que** les matériaux constitutifs de la matrice polymérique et du support sont identiques ou compatibles et choisis dans le groupe des résines thermodurcissables comprenant PMMA, TEGDMA, BISGMA, BDMA, HDDMA, UDMA, époxy et vinylester, ou dans le groupe des résines thermoplastiques notamment PC, POM, PU.

7. Préforme selon l'une des revendications précédentes, **caractérisé en ce que** les fibres sont choisies dans le groupe comprenant les fibres de verre E, R, S, AR et XRO, silice

8. Préforme selon l'une des revendications précédentes, **caractérisé en ce que** les fibres représentent de 40 à 80%, de préférence 60 à 70% en volume de la matrice polymérique, le complément à 100 % étant occupé par la matrice.

9. Procédé de fabrication de la préforme objet de l'une des revendications précédentes **caractérisé en ce que** dans un moule :
∘ on positionne des cylindres constitués de fibres longues unidirectionnelles longitudinales noyées dans une matrice polymérique réticulée (2),
∘ on coule une résine entre chaque cylindre,
∘ on réticule ladite résine,
∘ on démoule la préforme formé de la résine réticulée incluant les portions de joncs.

10. Inlay core composite fibré constitué de fibres longues unidirectionnelles (UD) longitudinales noyées dans une matrice polymérique réticulée (2).

11. Utilisation de la préforme selon l'une des revendications 1 à 8, pour la réalisation d'inlay core, de tenons ou de piliers d'implant par usinage par CFAO du matériau composite remplissant les alvéoles.

## Patentansprüche

1. Vorformling für eine CAD/CAM-Zerspanvorrichtung mit einer Oberseite und einer Unterseite, mit mindestens einer Zelle, die mit einem durch CAD/CAM bearbeitbaren Verbundmaterial gefüllt ist, wobei das Material mindestens 80%, besser mindestens 90% und am besten 100% langer, unidirektionaler Fasern enthält, die in einer vernetzten Polymermatrix (2) eingebettet sind,
wobei die Fasern dabei in der Matrix vertikal, bezogen auf die Ober- und Unterseite des Trägers, positioniert sind.

2. Vorformling nach dem Anspruch 1, **dadurch gekennzeichnet, dass** die Zellen auf jeder Trägerseite münden und dass das gesamte Volumen der Zellen mit Verbundmaterial gefüllt ist.

3. Vorformling nach einem der vorhergehenden Ansprüche, **dadurch gekennzeichnet, dass** die Zellen zylindrisch sind.

4. Vorformling nach Anspruch 3, **dadurch gekennzeichnet, dass** die Zellen einen Durchmesser zwischen 3 und 20 mm haben und eine Tiefe, die möglichst zwischen 10 und 24 mm liegen sollte.

5. Vorformling nach einem der vorhergehenden Ansprüche, **dadurch gekennzeichnet, dass** der Träger die Form einer Scheibe hat, möglichst mit einem Durchmesser gleich 98 mm.

6. Vorformling nach einem der vorhergehenden Ansprüche, **dadurch gekennzeichnet, dass** das Material, das die Polymermatrix und den Halter bildet, identisch oder kompatibel ist und aus der Gruppe der thermoplastischen Harze, die PMMA, TEGDMA, BISGMA, BDMA, HDDMA, UDMA, Epoxy und Vinylester umfassen, oder aus der Gruppe der thermoplastischen Harze, insbesondere PC, POM, PU, ausgewählt wird.

7. Vorformling nach einem der vorhergehenden Ansprüche, **dadurch gekennzeichnet, dass** die Fasern aus der Gruppe ausgewählt werden, zur der die Glasfasern E, R, S, AR und XRO, Silizium gehören.

8. Vorformling nach einem der vorhergehenden Ansprüche, **dadurch gekennzeichnet, dass** die Fasern 40 bis 80%, besser noch 60 bis 70% Volumen der Polymermatrix betragen, wobei der fehlende Prozentsatz bis 100% von der Matrix gebildet wird.

9. Verfahren zur Herstellung des Vorformlings, der Gegenstand eines der vorhergehenden Ansprüche ist, **dadurch gekennzeichnet, dass** in eine Form:
o Zylinder, bestehend aus langen, unidirektionalen, längslaufenden Fasern bestehen, die in einer vernetzten Polymermatrix (2) eingebettet sind, eingesetzt werden,
o ein Harz zwischen die einzelnen Zylinder gegossen wird,
o dieses Harz vernetzt wird,
∘ der aus dem vernetzten Harz gebildete Vorformling, der noch Halteabschnitte enthält, aus der Form entnommen wird.

10. Inlaykern aus Verbundfasern, bestehend aus langen, unidirektionalen, längslaufenden Fasern (UD), die in einer vernetzten Polymermatrix (2) eingebettet sind.

11. Einsatz des Vorformlings nach einem der vorstehenden Ansprüche 1 bis 8 zur Herstellung eines Inlaykerns, von Implantat-Zapfen oder Stegen, durch CAD/CAM-Zerspanung des Verbundmaterials, mit dem die Zellen gefüllt sind.

## Claims

1. A preform for CAD/CAM machining apparatus, the preform having an upper face and a lower face and comprising at least one cell filled with a composite material to be machined by CAD/CAM, said material comprising at least 80%, preferably 90%, more preferably 100% long unidirectional fibers embedded in a cross-linked polymer fiber matrix (2) said fibers being placed in the matrix vertical to the upper and lower faces of the support.

2. The preform according to claim 1, **characterized in that** the cells abut each surface of the support and **in that** the entire volume of the cells is filled with the composite material.

3. The preform according to one of the previous claims, **characterized in that** the cells are cylindrical.

4. The preform according to claim 3, **characterized in that** the cells are 3 to 20 mm in diameter and preferably 10 to 24 mm deep.

5. The preform according to one of the previous claims, **characterized in that** the support is in disc form, preferably 98 mm in diameter.

6. The preform according to one of the previous claims, **characterized in that** the materials constituting the polymer matrix and the support are identical or compatible and chosen within the group of thermosetting resins containing PMMA, TEGDMA, BISGMA, BDMA, HDDMA, UDMA, epoxy and vinylester, or in the group of thermoplastic resins notably PC, POM, PU.

7. The preform according to one of the previous claims, **characterized in that** the fibers are chosen from the group comprising glass fibers E, R, S, AR, and XRO, silica.

8. The preform according to one of the preceding claims, **characterized in that** the fibers represent 40 to 80%, preferably 60 to 70% by volume of the polymer matrix, supplemented by the matrix to 100%.

9. A process for fabricating the preform that is the object of one of the previous claims, **characterized in that** into a mold:
o one positions the cylinders constituted of long longitudinal unidirectional fibers embedded in a cross-linked polymer matrix (2),
∘ one pours a resin between each cylinder,
∘ one cross-links said resin,
∘ one unmolds the preform formed from the cross-linked resin, including the rod portions.

10. An inlay core composite fiber constituted of long longitudinal unidirectional (UD) fibers embedded in a cross-linked polymer matrix (2).

11. The use of the preform according to claim 1 to 8, to manufacture inlay core, tenons, or implant screws machined by CAD/CAM from composite material filling the cells.
